Europäisches Patentamt

European Patent Office

Office européen des brevets

(11) Publication number: 0 392 654
A1

## (12) EUROPEAN PATENT APPLICATION

(21) Application number: 90302173.1

(22) Date of filing: 01.03.90

(51) Int. Cl.⁵: F16J 15/56

(30) Priority: 03.04.89 US 332074

(43) Date of publication of application:
17.10.90 Bulletin 90/42

(84) Designated Contracting States:
DE FR GB IT

(71) Applicant: WYNN'S PRECISION INC.
104 Hartmann Drive
Lebanon Tennessee 37087(US)

(72) Inventor: Zielinski, Douglas H.
1603 Burchett Drive
Lebanon, Tennessee 37087(US)
Inventor: Rogers, Alan J.
1821 Indian Hill Road
Lebanon, Tennessee 37087(US)

(74) Representative: Warren, Keith Stanley et al
BARON & WARREN 18 South End Kensington
London W8 5BU(GB)

(54) Hydraulic seal and piston rod guide.

(57) An automotive power steering unit (10) has a shaft guiding and sealing assembly which includes a guide bushing (30) received within the open end (21) of a cylinder (12) with an inside surface (35) forming a close fit with the piston rod (15) to provide guidance and support for the rod. An annular seal (50) is carried on an inner end of the bushing (30) within the cylinder and has an outer static sealing lip (62) which engages the cylinder wall and an inner dynamic portion (58) which engages the rod (15). A portion of the bushing forms an anti-extrusion backing wall (55) which supports the seal from excessive bending under hydraulic pressure. A retainer snap ring (40) retains the bushing in place and supports the bushing against dislodgment by reason of force impact of the tie rod ball housing against the bushing in one extreme steering lock position of the steering mechanism.

FIG-4

EP 0 392 654 A1

## HYDRAULIC SEAL AND PISTON ROD GUIDE

This invention relates to piston closure seals and more particularly to a combined guide bushing and seal for the open end of a double-acting piston in an automotive power steering unit, such as for rack and pinion units.

Power steering actuator pistons, such as commonly employed for rack and pinion steering gear, use an open-ended, double-acting actuating piston. The mechanical and hydraulic forces and pressures to which the piston components may be subjected are relatively high, and it is not uncommon to have peak pressure spikes of up to 1,500 psi and mechanical loading forces up to 3,500 pounds. For example, in the fully retracted or steering lock position, the tie rod ball housing may physically come into contact with the bushing or bushing retainer at the open end of the working cylinder, with relatively great force, and provision must be made for this force to be absorbed without dislodging the bushing or the internal seal.

The internal working seal must provide for retention of the static pressure within the cylinder housing, which may have a high spike of up to 1,500 psi and must also provide an effective dynamic seal with the piston rod, over a long service or design life, such as 100,000 miles.

Fig. A of the drawing illustrates a typical arrangement of the prior art in which separate components are implied for forming the seal, for supporting the seal, for forming a bushing for guiding the piston rod, and for retaining the bushing against impact loads. In Fig. A, the open end of the cylinder 1 receives a shaft bushing 2, an annular bushing retainer 3, a shaft seal 4, with an anti-extrusion ring 5 backing the seal 4 and positioned between the seal and the bushing, with an anti-extrusion ring 5 backing the seal 4 and positioned between the seal and the bushing. The seal retainer 3 is retained by an annular retainer wire 6 received within cooperating or mating grooves formed in the cylinder wall and the retainer 3. The prior art arrangement is relatively costly and cumbersome in that it requires the assembly of the seal 4 and the anti-extrusion or backing ring 5 on the bushing 2, and requires the assembly of these parts in the open end of the cylinder 1, and then requires the locking in place of the bushing retainer 6 by feeding a wire through an external access opening 7 formed in the cylinder wall and into the mating grooves.

There is accordingly a need for a simplified and improved assembly for sealing the open end of a hydraulic cylinder in an automotive type power steering unit, integrating the functions of the various parts of the prior art and improving upon the overall performance while lowering the component and labor costs.

The combined bushing and seal of this invention greatly simplifies conventional structure and permits a reduction in manufacturing expenses and materials cost. A guide bushing is received in the open end of the cylinder and forms a stop or abutment for the rod, in one extreme position. The bushing has an outer surface which forms a close fit with the inside wall of the cylinder and is retained by a snap ring retainer.

The inside surface of the bushing forms a close sliding fit with the piston rod to provide side thrust support for the rod. An annular seal is carried on the inner end of the bushing within the cylinder. This seal has an outer static sealing lip in engagement with the cylinder wall to prevent leakage of hydraulic fluid therepast. A dynamic portion of the seal is in sliding engagement with the rod and is backed up by an integral portion of the bushing forming an anti-extrusion support.

A portion of the bushing extends over and outwardly into abutment with the open end of the cylinder. A face portion forms a mechanical abutment or stop for the tie rod ball housing portion of the steering, in an extreme lock or turned position of the steering gear. This mechanical stop prevents dislodging thrusts form being applied to the bushing retainer snap ring.

Invention may be described as an automotive power-steering unit including a high pressure hydraulic actuator with an open ended cylinder and with a piston rod extending through the open end of the cylinder and connected to a tie rod housing, and a guide bushing received within the cylinder open end having an outer surface forming a close fit with the inside wall of the cylinder and having an inside surface forming a close fit with the piston rod to provide thrust support for the rod, characterized by an annular elastomer seal on the end of the bushing within the cylinder having an outer static sealing lip engaging the cylinder wall to prevent leakage of hydraulic fluid therepast, and further having an inner dynamic sealing lip portion in engagement with the rod, including an anti-extrusion backing wall on the bushing which supports the seal from excessive bending under hydraulic pressure.

In order that the invention may be more readily understood, reference will now be made to the accompanying drawings, in which:

Fig. 1 is a broken away view, partly in section, of a double-acting rack and pinion hydraulic actuator assembly in accordance with this invention;

Fig. 2 is an enlarged sectional view of the bushing and seal taken along the line 2--2 of Fig. 3;

Fig. 3 is an end view looking generally along the line 3--3 of Fig. 2; and

Fig. 4 is a fragmentary sectional view showing the installation of the combined bushing and seal in the open end of the cylinder.

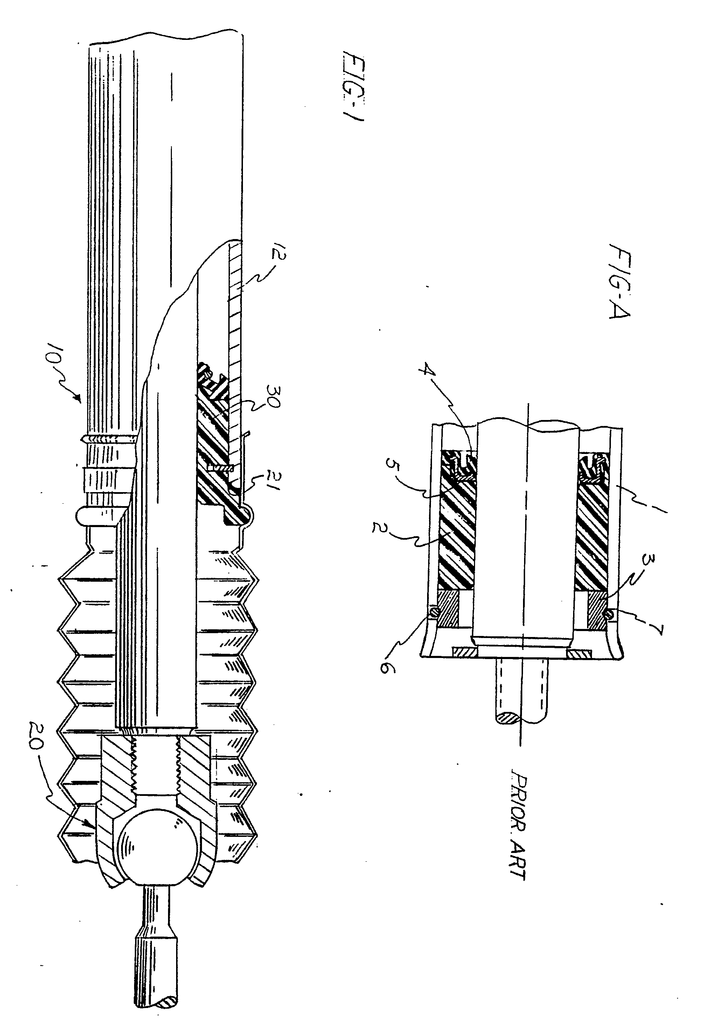

Referring to the figures of the drawings, which represent a preferred embodiment of the invention, an open-ended, double-acting hydraulic actuator for a rack and pinion type of gear assembly is illustrated generally at 10 in Fig. 1. The rack and pinion gear assembly includes an open ended tubular cylinder 12 having a rod 15 extending through the open end. It will be understood that the cylinder 12 is double-acting, and that the rod may move either to the right or to the left as shown in Fig. 1, as directed by a piston, not shown, within the interior of the cylinder. The hydraulic fluid pressure, on either side of the piston, may have maximum pressure spikes up to about 1,500 psi, in use.

The piston rod 15 terminates at its extended end at a tie rod ball housing assembly 20. The rod 15 is subject to both axial and side thrust loading. It is accordingly necessary to provide for side thrust support, as well as for static and dynamic sealing at the open end 21 of the cylinder 12. Further, in one of the full extreme lock positions, the tie rod housing assembly 20 may come into physical abutment with the cylinder at the open end, and it is necessary to provide for the absorption of this end thrust or this mechanical loading, which can be as high as 3,500 pounds for short periods of time.

This invention provides a simplified and improved arrangement in sealing the hydraulic fluid within the cylinder and guiding the rod 15 for movement through the open end 21 while supporting the rod against side thrusts. As shown in Figs. 2-4, the invention includes a generally annular or tubular bushing 30, forming a guide bushing, which is received within the open cylinder end 21. The guide bushing 30 is provided with an outer cylindrical surface 32 which forms a close fit with the inside wall of the cylinder at the open end. The bushing 30 is further formed with an inside cylindrical surface 35 which forms a close sliding fit with the surface of the rod 15, to provide side thrust support for the rod.

As shown in Figs. 2 and 4, the bushing 30 is provided with a somewhat enlarged outer end portion 35 which is stepped or shouldered at an annular shoulder 36. As shown in Fig. 4, the shoulder 36 is proportioned to come into full abutment with the flat terminal surface of the cylinder end 21, thereby protecting the end 21 and forming an outer radial impact abutment surface 37.

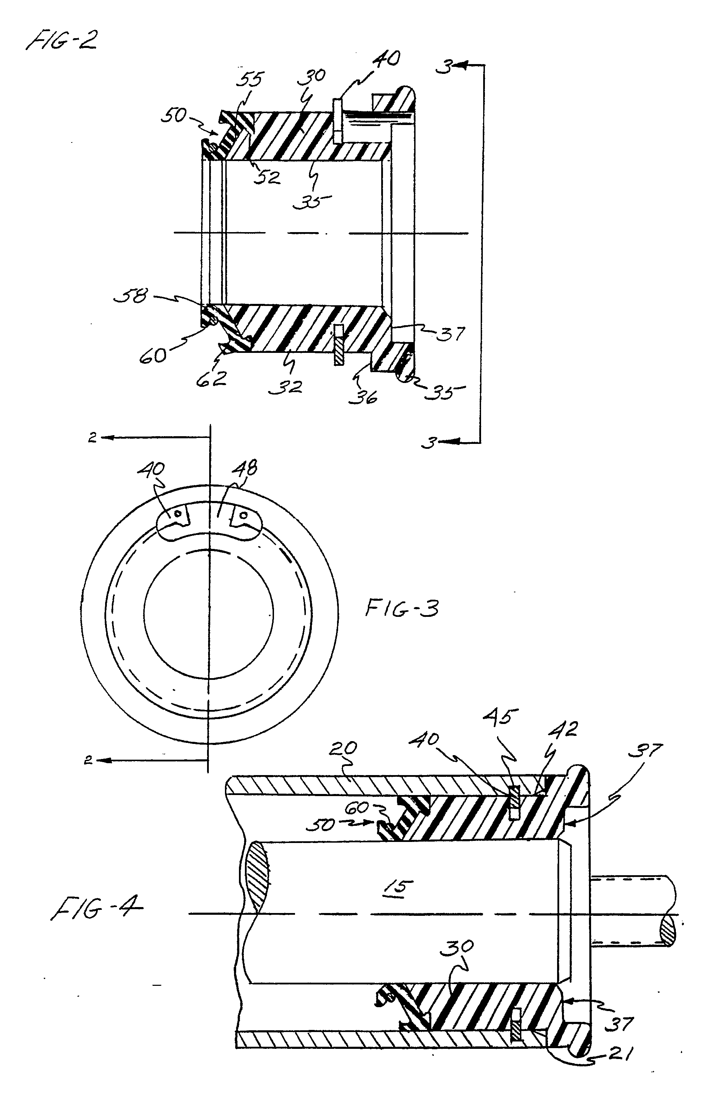

The bushing is held in place within the cylinder open end by a retractable circle snap ring 40. The snap ring 40 is retracted when the bushing is pressed into place by a lead-in chamfer 42 formed in the cylinder open end. The ring then snaps into an inwardly opening snap ring groove 45. The front surface of the bushing 30 is arcuately relieved at 48, as shown in Fig. 3, to provide access openings for a snap ring compression tool in the event it becomes necessary to remove the bushing 30 by compressing the snap ring, in service.

A combined static and dynamic molded elastomer garter spring seal 50 is mounted on the inner end of the bushing 30. For this purpose, the inner end is formed with an annular outwardly facing generally V-shaped recess or depression 52, to receive a portion of the body of the seal 50 therein. Thus, the seal 50 may be assembled onto the bushing 30 by expanding and snapping the same into the annular depression 52. In this position, the inner end of the bushing 30 provides an inwardly tapered or sloping conical wall portion 55. The wall portion 55 forms an anti-extrusion support for the inner dynamic seal portion 58 of the seal 50. The dynamic seal portion 58 is retained by a conventional encircling garter spring 60 received in the outwardly facing annulus of the seal.

The seal 50 further forms an outwardly deflected annular static sealing lip 62. The lip 62 is shown in the relaxed position in Fig. 2, and when the same is assembled within the open end 21 of the cylinder 20, the lip is somewhat deflected inwardly, and is subject to the pressure from within the cylinder to form a highly efficient static seal, to prevent the escape of hydraulic fluid therepast.

The body of the bushing 30 is preferably formed of a thermoplastic polyester resin which contains uniformly dispersed glass fibers or mineral glass fiber combinations. Preferably, a glass filled terephthalate (PFT) resin is used which is specially formulated for rapid crystallization during the molding process, and the resin sold by E. I. du Pont de Nemours and Company under the trade name "Rynite 545" is a preferred product for the bushing 30.

The outer thrust face portion 36 is proportioned to receive axial or end thrust loadings which may be imposed thereon by the tie rod ball assembly or housing 20, when the piston rod 15 is fully retracted. This condition would occur in one extreme steering lock condition, and in such condition, relatively high mechanical loads may be applied to the end of the actuating cylinder, and these loads are carried by the bushing.

The bushing is assembled in the open end 21 of the cylinder 20 merely by sliding the same in place with a suitable pressing tool. The chamfer 42 compresses the snap ring 40 until it reaches the cylinder groove 45.

The seal 50 is assembled on the bushing 30, prior to insertion. No other internal stop or special configuration is required for the open end of the cylinder, and the inside wall may be axially straight in this region throughout its length, with the exception of the snap ring groove 45.

The tapered portion 55 supports the body of the seal 50 against inward extrusion or dislodgment due to the relatively high pressures which are seen within the interior annulus and applied against the seal. In fact, the lip 62 is designed so that such pressures cause the lip to bear with increasing force against the inside cylinder wall.

## Claims

1. An automotive power steering unit, including a high pressure hydraulic actuator has an open-ended cylinder (12), with a piston rod (15) extending through the cylinder open end (21) and connected to a tie rod housing (20) and a guide bushing (30) received within said cylinder open end, having an outer surface forming a close fit with the inside wall of said cylinder and having an inside surface forming a close sliding fit with said rod to provide thrust support for said rod, characterized by an annular elastomer seal (50) carried on an end of said bushing within said cylinder, said seal having an outer static sealing lip portion (63) in engagement with the cylinder wall to prevent leakage of hydraulic fluid therepast between said cylinder wall, and an inner dynamic sealing lip portion (38) in sliding engagement with said rod, and an anti-extrusion backing wall (55) on said bushing supporting said seal from excessive bending under hydraulic pressure.

2. A unit of claim 1 further characterized by a bushing portion (35) external to said cylinder open end and extending radially into abutment to said cylinder end and having a facing surface (36) defining a tie rod housing stop.

3. A unit of claim 1 further characterizing an outwardly facing V-shaped recess (52) on the inner end of said bushing in said cylinder forming said anti-extrusion wall, a portion of said seal being received in said recess for retention of said seal on said bushing.

FIG-1

FIG-A

PRIOR ART

FIG-2

FIG-3

FIG-4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 747 605 (ANTONINI) <br> * Abstract; figures * <br> --- | 1 | F 16 J 15/56 |
| A | WO-A-8 906 762 (DARTNALL) <br> * Abstract; figure 1 * <br> ----- | 1 | |

**TECHNICAL FIELDS SEARCHED (Int. Cl.5)**

F 16 J
B 62 D

The present search report has been drawn up for all claims

| Place of search | Date of completion of the search | Examiner |
|---|---|---|
| THE HAGUE | 31-07-1990 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)